# EUROPEAN PATENT APPLICATION

(11) **EP 1 096 493 A2**
(43) Date of publication of application: **02.05.2001**
(21) Application number: 00402843.7
(22) Date of filing: 13.10.2000
(51) Int. Cl.: G11B 21/10

(54) **Off-center voice-coil motor**

(30) Priority: 01.11.1999 US 431764
(71) Applicant: IOMEGA CORPORATION, Roy, UT 84067 (US)
(72) Inventor: Swenson, Mark A., Lafayette, CO 80026 (US)
(74) Representative: Cabinet Hirsch

(57) **Abstract**

A disk drive has a linear actuator (16) with an off-center carriage assembly (20). A balance weight (39) brings the line of force of the actuator into alignment with the center of mass of the carriage assembly. The carriage assembly comprises a carriage body (40). The carriage body is an insert molded part onto which the balance weight and coil (18) are bonded. Two rod holders (58, 60) are stationery on the chassis (12) of the drive (10). The carriage has bearings (32, 34) on which the carriage rides on a carriage bearing rod (36) and an outrigger rod (37). These rods are mounted in rod holders.

## Description

### Background of the Invention

This invention relates to a linear voice-coil motor (VCM) actuator for carrying read/write heads into engagement with a recording medium, and more particularly to a carriage assembly which is off-center with respect to the read/write heads.

### Description of the Prior Art

Disk drives for storing electronic information are found in a wide variety of computer systems, including workstations, personal computers, and laptop and notebook computers. Such disk drives can be stand-alone units that are connected to a computer system by cable, or they can be internal units that occupy a slot, or bay, in the computer system. Laptop and notebook computers have relatively small bays in which to mount internal disk drives and other peripheral devices, as compared to the much larger bays available in most workstation and personal computer housings. The relatively small size of peripheral bays found in laptop and notebook computers, can place significant constraints on the designer of internal disk drives for use in such computers. Techniques that address and overcome the problems associated with these size constraints are therefore important.

Disk drives of the type that accept removable disk cartridges have become increasingly popular. One disk drive product that has been very successful is the ZIP^{TM} drive designed and manufactured by Iomega Corporation, the assignee of the present invention. ZIP^{TM} drives accept removable disk cartridges that contain a flexible magnetic storage medium upon which information can be written and read. The disk-shaped storage medium is mounted on a hub that rotates freely within the cartridge. A spindle motor within the ZIP^{TM} drive engages the cartridge hub when the cartridge is inserted into the drive, in order to rotate the storage medium at relatively high speeds. A shutter on the front edge of the cartridge is moved to the side during insertion into the drive, thereby exposing an opening through which the read/write heads of the drive move to access the recording surfaces of the rotating storage medium. The shutter covers the head access opening when the cartridge is outside of the drive, to prevent dust and other contaminants from entering the cartridge and setting on the recording surfaces of the storage medium.

The ZIP^{TM} drive is presently available for workstations and personal computers in both stand-alone and internal configurations. An example of such disk drive is shown in U.S. Patent No. 5,508,864, Briggs, *et al.* U.S. Patent 5,920,445, Angellotti, *et al.* relates to the mounting of a carriage assembly for a linear actuator of ZIP^{TM} drive.

The current ZIP^{TM} drive uses a centered coil on a carriage body of a head stack assembly (HSA). The HSA is positioned inside a voice-coil motor (VCM) magnet assembly. The magnet assembly must create a magnetic field for the coil in four places. This requirement arises from the need to generate a force that is sufficient to move the HSA, and that is distributed symmetrically about the HSA's center of mass. Four magnets, two center poles, and two outer return paths are needed in the magnet assembly to achieve this objective, because the carriage body interrupts the coil/VCM path. Integrating the VCM with the HSA is a complicated and difficult endeavor because the VCM magnet assembly surrounds the HSA. Furthermore, integrating the VCM with the HSA generates a risk that the relatively fragile HSA will be damaged by the VCM during operation of the disk drive. In addition, the relatively high number of parts in the VCM magnet assemblies of common VCMs decreases the reliability and increases the cost of such devices.

MKE's one-inch-tall LS-120 incorporates a simplified VCM; however, the VCM is not off-center. ORT's one-half-inch-tall version of the LS-120 incorporates an off-center VCM; however, this device does not incorporate a balance weight on its HSA to cause the center of mass of the HSA to coincide with the line of force of the VCM. Instead, this device relies on sophisticated (and costly) DSP servo-electronics to position its HSA.

It is an object of the present invention to provide a simple, easy to assemble, and cost effective disk drive.

### Summary of the Invention

In accordance with the invention, the components of a linear VCM are arranged in a unique manner so as to produce a relatively simple, low cost actuator for positioning the read/write heads of a disk drive. The actuator includes a carriage assembly having a carriage body. A head stack assembly (HSA) is coupled to the carriage body. The HSA includes head gimbal assembly (HGA). The HGA includes a pair of read/write heads for interfacing with a rotatable recording medium such as a data-storage disk. The carriage assembly slidably translates on a carriage bearing rod and an outrigger rod via bearings disposed on the carriage assembly.

The coil of the VCM is separated from the HSA and the carriage bearing and outrigger rods so that a simple three-piece VCM magnet assembly can be placed around the coil. A balance weight is attached to the carriage body to bring the center of mass of the carriage assembly to lie on the line of force generated by the VCM. The use of the balance weight is an important consideration of this invention in that it enables the force vector generated by the VCM to pass directly through the center of mass of the carriage assembly. This feature prevents an overturning moment from being induced into the carriage assembly. Such a moment, if present, would be counteracted by reaction forces in the carriage bearing and outrigger rods. Such reaction forces produce friction between the carriage bearing and outrigger rods and their corresponding bearings. This friction causes instability in the position-control servo loop. Therefore, by incorporating a balance weight in this device, position-control instability due to imbalance in the carriage-assembly mass is eliminated, and a low-cost position-control servo-electronics architecture can be used. Also, the carriage bearing rod is located in the plane of rotation of the data-storage disk, thereby eliminating any overturning moment caused by friction between the read/write heads and the data-storage disk.

Further in accordance with the invention the VCM magnet assembly includes an injection molded magnet which is bonded to the return path. A center pole completes the carriage assembly. The carriage assembly is a low-cost, low-weight, insert-molded part to which the balance weight and coil are bonded. Rod holders enable the linear actuator to be a stand-alone module.

All of the foregoing features contribute to low-cost and ease of assembly of the actuator of the present invention.

For a more detailed disclosure of the invention and for further objects and advantages thereof, reference is to be had to the following description taken in conjunction with the accompanying drawings.

### Brief Description of the Drawings

The foregoing summary, as well as the following detailed description of a presently-preferred embodiment, is better understood when read in conjunction with the appended drawings. For the purpose of illustrating the invention, there is shown in the drawings an embodiment that is presently preferred, it being understood however, that the invention is not limited to the specific methods and instrumentalities disclosed. In the drawings:
Figure 1 is a perspective view of a disk drive that incorporates the off-center VCM of the present invention;
Figure 2 is a perspective view of a linear actuator and a circuit board of the disk drive shown in Figure 1;
Figures 3A-3C are top, side, and end views, respectively, of the VCM shown in Figure 1;
Figure 4 is an end view of a coil of the VCM shown in Figures 1 and 3 depicting the center of force of the VCM and the center of mass of the carriage assembly;
Figure 5 is a bottom perspective view of the linear actuator shown in Figure 2 with an outer return path and magnet removed from the voice-coil motor;
Figure 6 is a top perspective view of a magnet assembly of the VCM shown in Figures 1 and 3;
Figure 7 is a top perspective view of a carriage assembly of the VCM shown in Figures 1 and 3; and
Figure 8 is a top perspective view of rod holders, a carriage bearing rod, and an outrigger rod of the linear actuator shown in Figures 2 and 5.

### Description of Preferred Embodiments

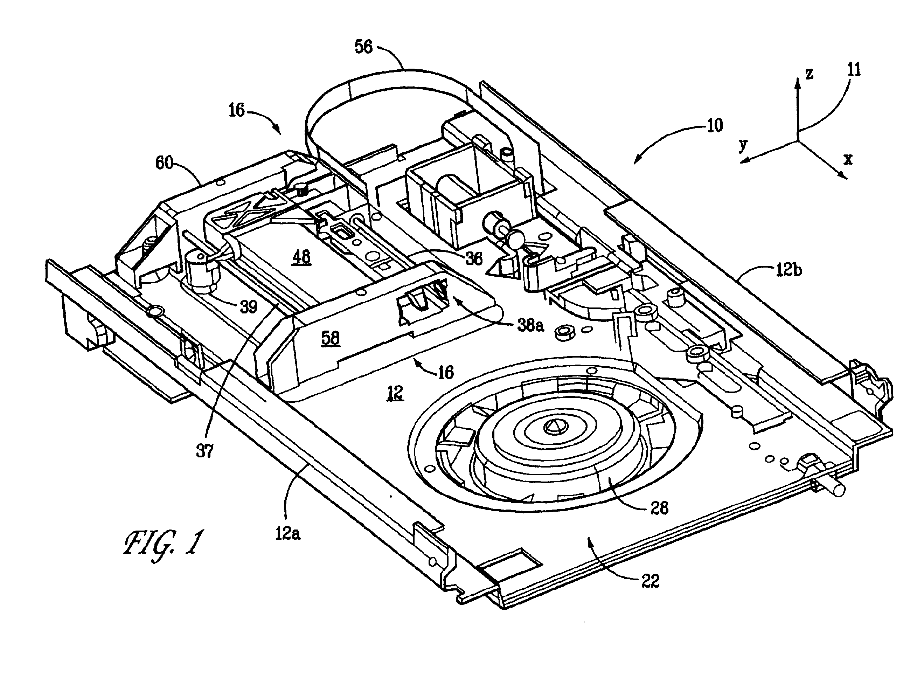

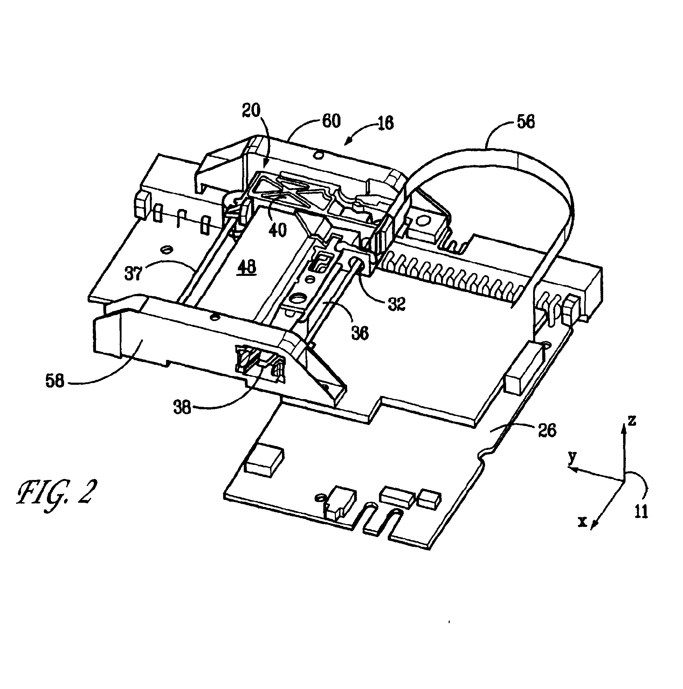

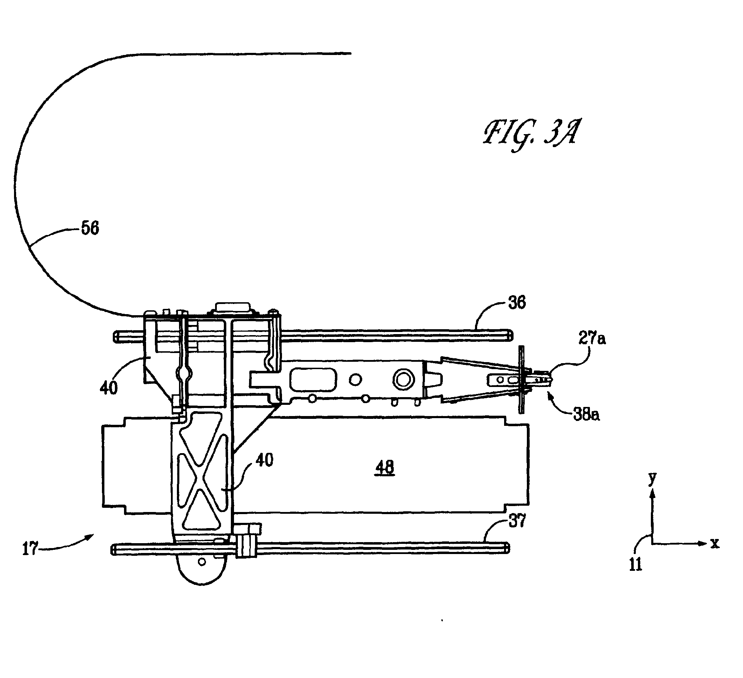

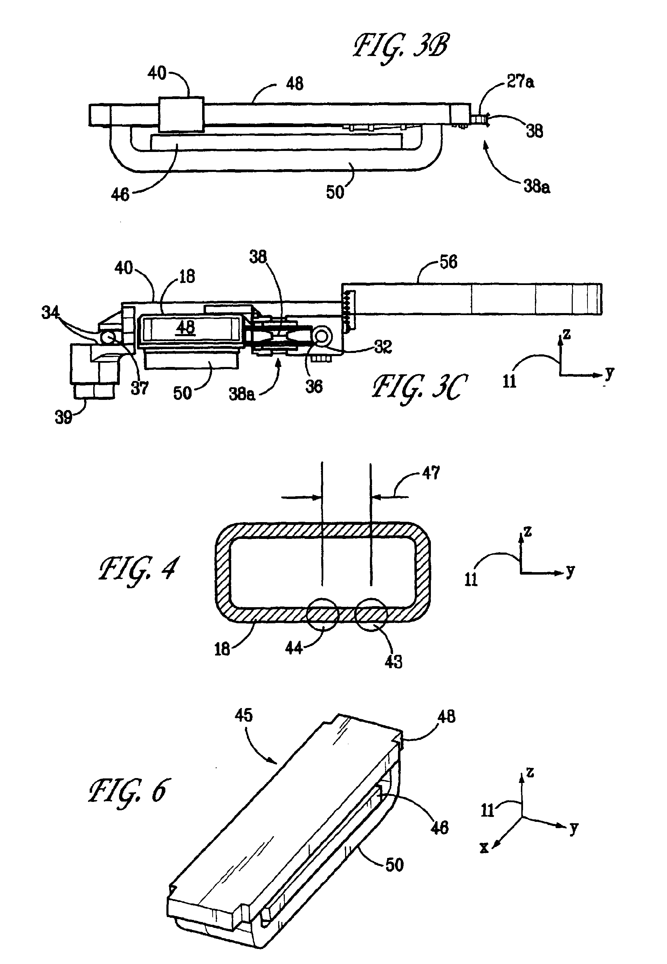

Figure 1 shows an exemplary disk drive 10 in which the present invention may be employed. Figure 1 and all of the remaining figures are referenced to a common coordinate system 11 denoted in each illustration. The disk drive 10 comprises a chassis 12 having u-shaped outer edges that form opposed guide rails 12a and 12b. The guide rails 12a and 12b guide a removable disk cartridge (not shown) which carries a data-storage disk into the disk drive 10 through an opening 22. The data-storage disk comprises a recording medium on which information is stored. In the present embodiment, the chassis is metallic. A thin metal top cover (not shown) of the disk drive 10 has been removed in Figure 1 so that the internal components of the drive are visible.

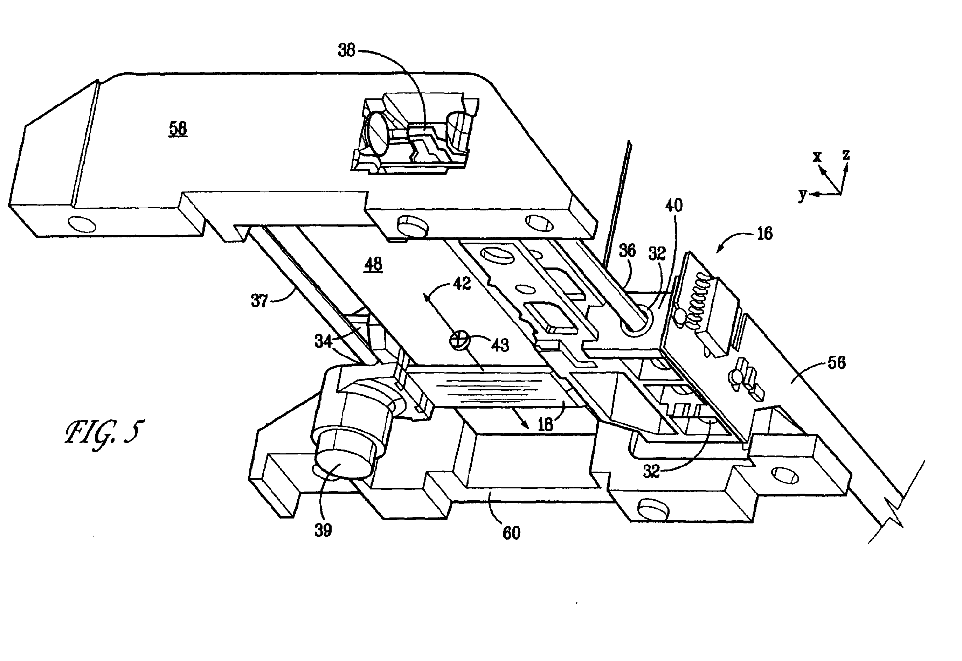

The disk drive 10 also has a linear actuator 16 disposed at the rear of the chassis 12 (see Figures 1, 2, and 5). The linear actuator 16 comprises a voice-coil motor (VCM) 17 (see Figures 3A-3C). The linear actuator 16 also includes a carriage assembly 20 having a carriage body 40 (see Figure 7). The carriage body 40 is preferably insert molded. The VCM 17 comprises a coil 18. The coil 18 is mounted to the carriage body 40, as is best shown in Figures 3C and 5. Preferably, the coil 18 is bonded to the carriage body 40.

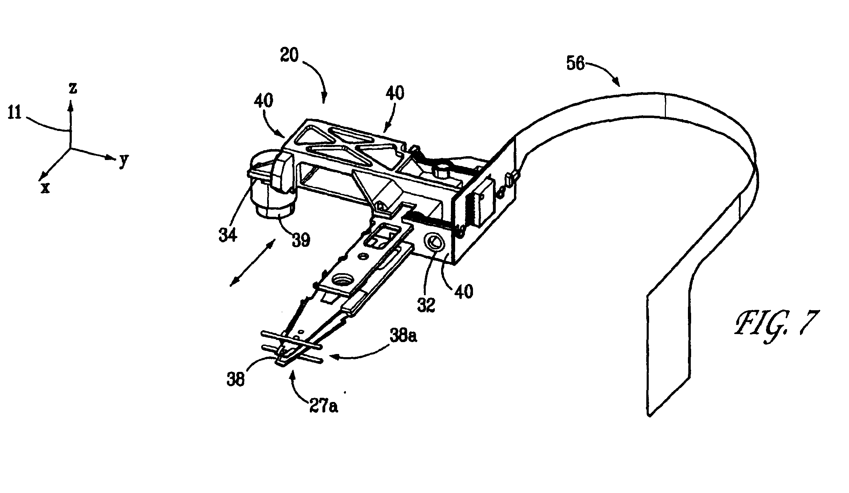

The VCM 17 also includes a magnet assembly 45 comprising an injectionmolded magnet 46, an outer return path 50, and a center pole 48 (see Figure 6). The magnet 46 is bonded to the outer return path 50. The outer return path 50 is fixedly coupled to the center pole 48. The coil 18 surrounds a portion of the center pole 48 (see, e.g., Figures 3C and 5; for clarity, the return path 50 and the magnet 46 have been removed from the linear actuator 16 in Figure 5, thereby exposing the center pole 48 and the coil 18). Electrical current is selectively directed to the coil 18. The coil 18, in conjunction with the magnet 46, generates a force in response to the current. This force is centered along the line 42 shown in Figure 5. The force causes the carriage assembly 20 to translate linearly, in a direction coincident with the line 42.

After a disk cartridge is inserted into the disk drive 10 via the opening 22, the carriage assembly 20 carries a pair of read/write heads 38 over the recording surfaces of the data-storage disk. The heads 38 are mounted on gimbals to form a head gimbal assembly (HGA) 27*a*. The HGA 27*a*, in turn, forms part of a head stack assembly (HSA) 38a (see Figures 3A through 3C). A spindle motor 28 is provided on the floor of the chassis 12. During cartridge insertion, the spindle motor 28 is translated vertically into engagement with a hub of the disk cartridge, in order to rotate the data-storage disk at a relatively high speed.

A circuit board 26 is mechanically coupled to the chassis 12 via a plurality of standoffs (not shown). The circuit board 26 carries the drive circuitry. The drive circuitry includes a servo-control system that positions the read/write heads 38 proximate a series of data tracks arranged concentrically on the data-storage disk. The carriage assembly 20 is electrically coupled to the circuit board 26 by way of a flexible printed circuit 56 (see Figures 2 and 7).

The carriage assembly 20 is suspended from a carriage-bearing rod 36 and an outrigger rod 37 by way of carriage-bearing-rod bearings 32 and outrigger bearings 34, respectively (see, e.g., Figures 3C and 5). This arrangement allows the carriage assembly 20 to slide linearly on the rods 36 and 37. The rods 36 and 37 may be round, polished, stainless steel rods. The bearings 32 and 34 have a low coefficient of friction, and preferably are zirconia bearings.

In accordance with the invention, the carriage assembly 20 is asymmetrically disposed about the carriage-bearing rod 36. In particular, the carriage assembly 20 is off-center in relation to the carriage-bearing-rod bearings 32. A balance weight 39 is mounted on the carriage body 40 at a position which causes the center of mass of the carriage assembly 20 to substantially align with the VCM line of force 42. Preferably, the balance weight 39 is bonded to the carriage body 40.

The relationship between the center of mass of the carriage assembly 20 and the VCM line of force 42 is illustrated diagrammatically in Figure 4. Figure 4 is an end view of the coil 18. Symbol 43 represents the center of the force generated by the VCM 17. Symbol 44 represents the center of mass of the carriage assembly 20 (including the balance weight 39). The centers of force and mass are separated by a distance 47. The distance 47 is exaggerated in the figure for clarity; as stated above, the centers of mass and force are substantially aligned due to the effect of the balance weight 39, i.e., the distance 47 is about zero in the present invention.

Minimizing the distance 47 reduces the loading on the bearings 32 and 34 during operation of the VCM 17. In particular, any offset between the center of mass of the carriage assembly 20 and the line of force 42 generates an overturning moment on the carriage body 40. The magnitude of this moment is proportional to the magnitude of the offset, i.e., the overturning moment is proportional to the distance 47. The overturning moment induces side loads in the rods 36 and 37 via the bearings 32 and 34. The resulting reaction forces in the rods 36 and 37 generate frictional forces between the rods 36 and 37 and the corresponding bearings 32 and 34. This friction accelerates wear on the rods 36 and 37 and the bearings 32 and 34. Furthermore, the frictional forces may induce instability in the servo control loop that governs the position of the carriage assembly 20 unless a complicated servo-electronics architecture is utilized. Hence, minimizing the distance 47 through the use of the balance weight 39 minimizes wear on the bearings 32 and 34 and the rods 36 and 37. Furthermore, the use of the balance weight 39 allows the position of the carriage assembly 20 (and the read/write heads 38) to be controlled using a relatively simple and inexpensive servo-control system.

The outrigger rod 37 stabilizes the carriage assembly 20. The centerline of the carriage-bearing rod 36 lies in the plane of rotation of the data-storage disk, thereby minimizing the over-turning moment on the carriage assembly 20 caused by friction between the heads 38 and the rotating disk. This feature further minimizes friction between the outrigger rod 37 and the outrigger bearing 34.

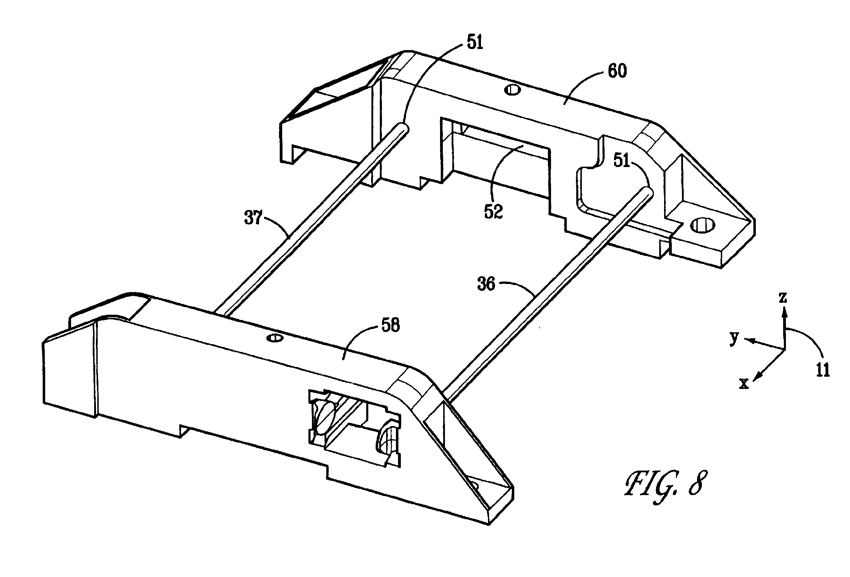

The carriage-bearing rod 36 and the outrigger rod 37 are fixed to a front rod holder 58 and a rear rod holder 60 via locating features 51 on the holders 58 and 60 (see Figure 8). The center pole 48 is fixed to the front and rear rod holders 58 and 60 by way of locating features 60. The return path 50 is coupled to the center pole 48 by the locating features 60, and by magnetic attraction to the center pole 48.

The rod holders 58 and 60 are stationary within drive 10, and are fixed to the chassis 12 using fastening means such as screws, snaps, clamps, etc. The use of the rod holders 58 and 60 in accordance with the invention enables the linear actuator 16 to be purchased as a stand-alone module. This feature reduces cost and adds to the ease of assembly of the disk drive 10.

While a particular embodiment has been shown and described, various modifications may be made. The appended claims, are, therefore, intended to cover all such modifications within the spirt and scope of the invention.

## Claims

1. A disk drive having a linear actuator (16) for carrying read/write heads (38) into engagement with a rotating recording medium comprising:
a carriage assembly (20), said read/write heads being mounted on said carriage assembly;
a voice-coil motor (17) including a coil (18) mounted on said carriage assembly for driving said heads into and out of engagement with said recording medium;
a carriage bearing rod (36) on which said carriage assembly slides linearly;
a carriage-bearing-rod bearing (32) in said carriage assembly on which said carriage assembly slides, said carriage assembly being off-center with respect to said carriage-bearing-rod bearing; and
a balance weight (39) on said carriage assembly.

2. The disk drive recited in claim 1 wherein said carriage-bearing-rod bearing and said balance weight are mounted on opposite sides of said read/write heads.

3. The disk drive recited in claim 1 or 2 wherein said balance weight is attached to said carriage assembly to bring a center of mass of said carriage assembly to lie on a line of force (42) of said voice-coil motor.

4. The disk drive recited in any of claims 1 to 3 wherein said voice-coil motor further comprises:
an injection molded magnet (46);
a return path (50) coupled to said magnet; and
a center pole (48).

5. The disk drive recited in any of claims 1 to 4 wherein said carriage assembly comprises a carriage body (40) and wherein said voice-coil motor comprises a coil (18), said balance weight (39) and said coil being bonded to said carriage body.

6. The disk drive recited in claim 5, wherein said carriage body is insert molded.

7. The disk drive recited in any of claims 1 to 6 further comprising two rod holders (58, 60) which are stationary in said disk drive, one end of said carriage-bearing rod (36) being mounted in one of said rod holders and the other end of said carriage-bearing rod being mounted in the other said rod holder.

8. The disk drive recited in any of claims 1 to 7 further comprising an outrigger rod (37) and an outrigger-rod bearing (34), said carriage assembly sliding linearly on said outrigger rod and said outrigger-rod bearing, said carriage assembly being off-center with respect to said outrigger bearing.

9. The disk drive recited in claim 8 wherein said carriage-bearing rod and said outrigger rod are mounted on opposite sides of said heads.

10. The disk drive recited in any of claims 1 to 9 wherein a centerline of said carriage-bearing rod is located in a plane of rotation of said recording medium.
